# EUROPEAN PATENT APPLICATION

(11) **EP 4 753 044 A1**
(43) Date of publication of application: **03.06.2026**
(21) Application number: 24844554.6
(22) Date of filing: 28.06.2024
(51) Int. Cl.: H01M 50/244

(54) **BATTERY TRAY, BATTERY PACK, AND VEHICLE**

(30) Priority: 26.07.2023 CN 202321988416 U
(71) Applicant: BYD Company Limited, Shenzhen, Guangdong 518118 (CN)
(72) Inventor: LU, Peng, Shenzhen, Guangdong 518118 (CN); YANG, Kun, Shenzhen, Guangdong 518118 (CN); LUO, Junxing, Shenzhen, Guangdong 518118 (CN); TAN, Zhijia, Shenzhen, Guangdong 518118 (CN); HU, Ronghui, Shenzhen, Guangdong 518118 (CN)
(74) Representative: Taor, Simon Edward William
(86) International application number: PCT/CN2024/102479
(87) International publication number: WO 2025/020860

(57) **Abstract**

A battery tray, a battery pack and a vehicle are provided. The battery tray includes a bottom plate (1), a side beam structure (2) and at least one first partition (7). The first partition (7) is located in a mounting cavity and divides the mounting cavity into at least two accommodating cavities (5) for housing a battery module (3). A partition body (71) of the first partition (7) is connected to the side beam structure (2), the partition body (71) is provided with a notch, and an insulating assembly (72) of the first partition (7) is configured to seal the notch. At least one of the side beam structure (2) and the first partition (7) that correspond to each accommodating cavity (5) is provided with a first exhaust port and an exhaust channel (21) communicating with the first exhaust port are provided in.

## Description

### CROSS-REFERENCE TO RELATED APPLICATION

This application claims priority to Chinese Patent Application No. 202321988416.X, filed on July 26, 2023 and entitled "BATTERY TRAY, BATTERY PACK AND VEHICLE", which is incorporated herein by reference in its entirety.

### TECHNICAL FIELD

This application relates to the field of battery pack, and in particular, to a battery tray, a battery pack, and a vehicle.

### BACKGROUND

In the conventional technology, a battery pack is usually formed by encapsulating a plurality of cells into a battery tray. High-temperature gas is discharged after thermal runaway of the cell, and the high-temperature gas is discharged into a pack body through an assembly gap between the cell and the tray, and then is discharged out of the pack body.

However, because a direction in which the high-temperature gas is discharged is not fixed, it is difficult to guide the high-temperature gas to a specific position, which easily leads to accumulation of the high-temperature gas in the battery pack. This causes short-circuit arcing of the pack body of the battery pack, and easily causes a rupture of the pack body of the battery pack.

### SUMMARY

This application is intended to resolve at least one of the technical problems in the prior art. For this purpose, an objective of this application is to propose a battery tray. The battery tray can discharge gas in time, thereby ensuring safe use.

This application further proposes a battery pack having the foregoing battery tray.

This application further proposes a vehicle having the foregoing battery pack.

The battery tray according to this application includes: a bottom plate, where the bottom plate is configured to support a battery module; a side beam structure, where the side beam structure is disposed on a periphery of the bottom plate and is enclosed together with the bottom plate to form a mounting cavity; and at least one first partition, where the first partition is located in the mounting cavity and is connected to the side beam structure, and divides the mounting cavity into at least two accommodating cavities for housing the battery module. The first partition includes a partition body and an insulating assembly. The partition body is connected to the side beam structure, the partition body is provided with a notch, and the insulating assembly is configured to: seal the notch and allow passage of a connection component connected to the battery module. At least one of the side beam structure and the first partition that correspond to each accommodating cavity is provided with a first exhaust port and an exhaust channel communicating with the first exhaust port. The first exhaust port is configured to guide gas in the accommodating cavity into the exhaust channel.

In the battery tray according to this application, the side beam structure is provided to cooperate with the first partition. The first partition includes the partition body connected to the side beam structure, and the insulating assembly used for passage of the connection component connected to the battery module, thereby dividing the bottom plate into the plurality of accommodating cavities. In addition, each accommodating cavity implements exhaust through a first exhaust port, a second exhaust port, and an exhaust channel that are communicated with each accommodating cavity. Once thermal runaway occurs on a battery module in a specific accommodating cavity, high-temperature gas generated by the battery module may enter the exhaust channel through the first exhaust port, and be discharged through the second exhaust port, so that the high-temperature gas does not accumulate inside the battery tray, thereby improving exhaust effect of the battery tray. In addition, due to blocking and heat insulation functions of the first partition, the high-temperature gas can be spatially and thermally isolated, and heat diffusion can be reduced, to avoid an impact of the thermal runaway on a battery module located in another accommodating cavity. This effectively prevents the high-temperature gas from causing secondary damage to the battery module or affecting another battery module.

In some examples of this application, the battery tray further includes a top plate. The top plate is sealingly connected to the side beam structure and the first partition, so that the accommodating cavity forms a sealed cavity.

In some examples of this application, the insulating assembly is provided with an avoidance area. The avoidance area is used for passage of the connection component connected to the battery module, and is adapted to enable the connection component to be sealed within the avoidance area.

In some examples of this application, the insulating assembly includes a first insulating member and a second insulating member. The first insulating member is disposed on the partition body, and the second insulating member is disposed on the first insulating member. A first avoidance area is provided between the first insulating member and the second insulating member.

In some examples of this application, the insulating assembly further includes a limiting member, and the second insulating member is provided with a second avoidance area. The limiting member is disposed on the second insulating member, and is configured to limit the connection component in the second avoidance area.

In some examples of this application, a sealant is disposed in the first insulating member, and the sealant is configured to fill a gap between the connection component and the first insulating member in the first avoidance area.

In some examples of this application, a sealant is disposed in the second insulating member, and the sealant is configured to fill a gap between the connection component and the second insulating member in the second avoidance area.

In some examples of this application, the insulating assembly includes the first insulating member and the second insulating member. The first insulating member is disposed on the partition body, and the second insulating member is disposed on the first insulating member. The avoidance area is provided on at least one of the first insulating member and the second insulating member.

In some examples of this application, a one-way valve is disposed at the first exhaust port, and the one-way valve is configured to guide gas in the accommodating cavity into the exhaust channel.

In some examples of this application, the battery tray further includes a second partition, and the first partition and the second partition are disposed in a crossed manner.

A battery pack according to this application includes a battery module and the foregoing battery tray. The battery module is disposed in the accommodating cavity. Because the battery pack in this application is provided with the battery tray in the foregoing embodiment, the battery pack is secure.

A vehicle according to this application includes the foregoing battery pack, so that the vehicle is safer.

Additional aspects and advantages of this application will be set forth in part in the following descriptions, and in part will be apparent from the following description or may be learned through practice of this application.

### BRIEF DESCRIPTION OF DRAWINGS

FIG. 1 is a diagram 1 of a structure of a battery tray according to an embodiment of this application;
FIG. 2 is a diagram 2 of a structure of a battery tray according to an embodiment of this application;
FIG. 3 is a diagram 3 of a structure of a battery tray according to an embodiment of this application;
FIG. 4 is an enlarged view of a part A in FIG. 1;
FIG. 5 is a diagram of a structure of a first partition according to an embodiment of this application;
FIG. 6 is a diagram 4 of a structure of a battery tray according to an embodiment of this application; and
FIG. 7 is a diagram 5 of a structure of a battery tray according to an embodiment of this application.

### Reference numerals:

1: bottom plate; 2: side beam structure; 21: exhaust channel; 22: first side beam; 23: second side beam; 3: battery module; 4: one-way valve; 5: accommodating cavity; 6: explosion-proof valve; 7: first partition; 71: partition body; 72: insulating assembly; 721: first insulating member; 722: second insulating member; 7221: through hole; 723: first avoidance area; 724: second avoidance area; 725: limiting member; 8: second partition.

### DESCRIPTION OF EMBODIMENTS

The following describes embodiments of this application in detail. Examples of embodiments are shown in the accompanying drawings. Same or similar reference numerals represent same or similar elements or elements with same or similar functions throughout. The following embodiments described with reference to the accompanying drawings are examples, and are merely intended to explain this application, but should not be construed as a limitation on this application.

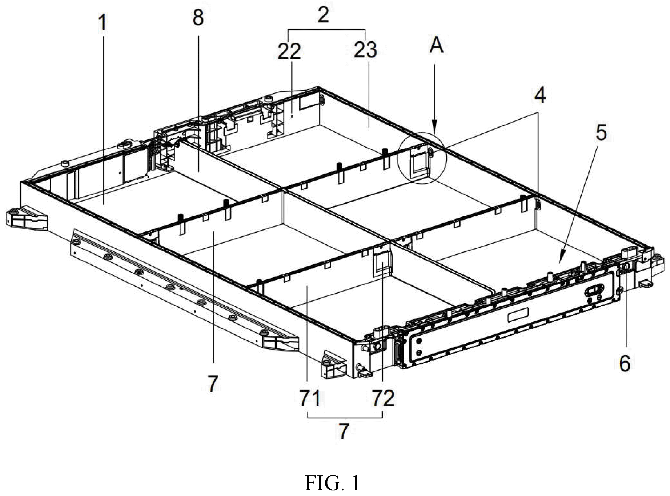

Refer to FIG. 1 to FIG. 7. This application provides a battery tray, including a bottom plate 1, where the bottom plate 1 is configured to support a battery module 3; a side beam structure 2, where the side beam structure 2 is disposed on a periphery of the bottom plate 1 and is enclosed together with the bottom plate 1 to form a mounting cavity; and at least one first partition 7, where the first partition 7 is located in the mounting cavity and is connected to the side beam structure 2, and divides the mounting cavity into at least two accommodating cavities 5 for housing the battery module 3. The first partition 7 includes a partition body 71 and an insulating assembly 72. The partition body 71 is connected to the side beam structure 2, the partition body 71 is provided with a notch, and the insulating assembly 72 is configured to: seal the notch and allow passage of a connection component connected to the battery module. at least one of the side beam structure 2 and the first partition 7 that correspond to each accommodating cavity 5 is provided with a first exhaust port and an exhaust channel 21 communicating with the first exhaust port. The first exhaust port is configured to guide gas in the accommodating cavity 5 into the exhaust channel 21. In addition, the insulating assembly seals the notch provided in the partition, so that gas can be discharged only through the first exhaust gas, thereby accelerating the exhaust in the battery pack, and improving exhaust effect of the battery pack.

Refer to FIG. 1. The battery tray includes the bottom plate 1, the side beam structure 2, and the at least one first partition 7.

Refer to FIG. 1. The bottom plate 1 is disposed at the bottom of the battery tray, and is configured to support the battery module 3. The side beam structure 2 is disposed on the periphery of the bottom plate 1. For example, the side beam structure 2 is disposed at an edge of the bottom plate 1, and the side beam structure 2 is annular as a whole. The side beam structure 2 and the bottom plate 1 are enclosed together to form the mounting cavity.

The bottom plate 1 is formed by extrusion of a metal material such as aluminum profile, and the bottom plate 1 and the side beam structure 2 are welded together by circumferential arc welding, laser welding, or the like. For example, the side beam structure 2 is a rectangle, a circle, or the like. A specific shape of the side beam structure 2 is not limited in this application, provided that the side beam structure 2 and the bottom plate 1 are enclosed through cooperation to form the accommodating cavity.

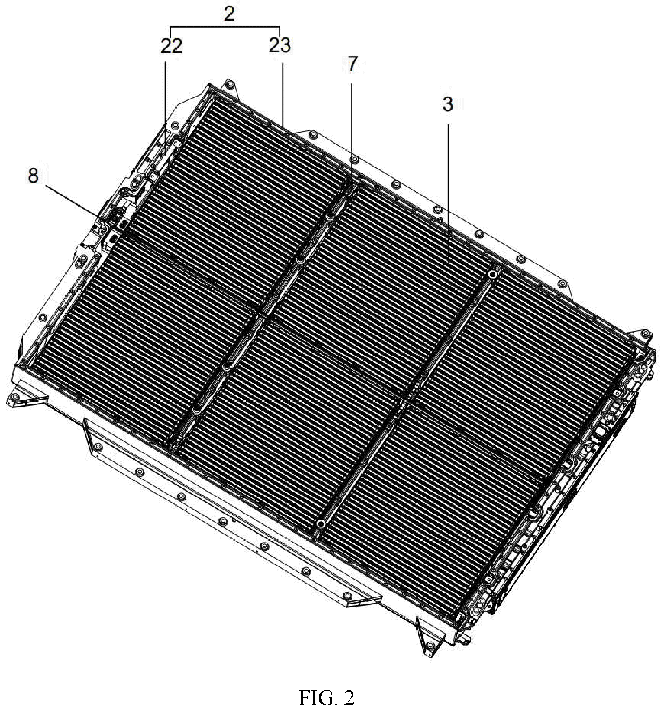

Refer to FIG. 1 and FIG. 2. The at least one first partition 7 is disposed. When a plurality of first partitions 7 are disposed, the plurality of first partitions 7 are disposed in parallel. The first partition 7 is disposed in the accommodating cavity, and is fastened to the side beam structure 2. The first partition 7 is configured to divide the mounting cavity into the at least two accommodating cavities 5, and each accommodating cavity 5 is used for housing the battery module 3.

In some embodiments, the first partition 7 includes the partition body 71 and the insulating assembly 72. Refer to FIG. 1 to FIG. 2. An end part that is of the partition body 71 and that is close to the side beam structure 2 is fastened to the side beam structure 2, and a side that is of the partition body 71 and that is close to the bottom plate 1 abuts against the bottom plate 1. Certainly, the side that is of the partition body 71 and that is close to the bottom plate 1 may alternatively be fastened to the bottom plate 1 by welding, bonding, or the like.

The partition body 71 is provided with the notch, and the insulating assembly 72 is disposed in the notch of the partition body 71. The insulating assembly 72 is configured to: seal the notch and allow passage of the connection component connected to the battery module. To be specific, the insulating assembly 72 seals the notch of the partition body 71, so that it is difficult for gas in accommodating cavities on both sides of the first partition 7 to flow at a connection position between the partition body 71 and the insulating assembly 72. Further, the connection component passes through the insulating assembly 72 to connect to the battery module 3.

In an embodiment of this application, the partition body 71 is processed by using a metal material such as steel, which helps improve structural strength of the partition body 71. The insulating assembly 72 is made of, for example, a rubber material, which is conducive to implementing insulation protection at an electrical connection position of the battery module 3. It is also conducive to reducing a dead weight of a partition apparatus, thereby reducing a dead weight of the battery tray, and implementing lightweight of the assembled battery pack. In addition, the insulating assembly 72 is made of a rubber material, which further helps improve sealing effect between the partition body 71 and the insulating assembly 72.

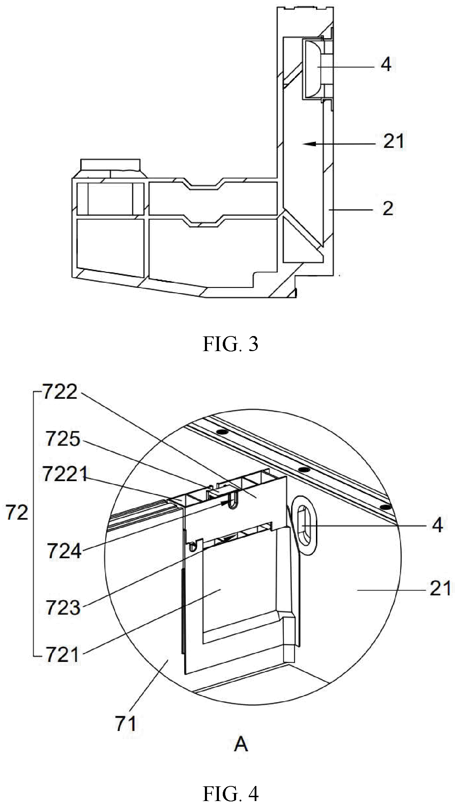

Refer to FIG. 4. The battery module 3 is disposed in each accommodating cavity 5. Battery modules 3 located on both sides of the first partition 7 are connected by using the connection component. The connection component is connected, for example, to a pole post of the battery module 3. The connection component is, for example, a busbar or an electric wire made of a conductive metal material such as copper, aluminum, iron, nickel, copper alloy, aluminum alloy, or the like.

The insulating assembly 72 is configured to allow passage of the connection component connected to the battery module. It should be noted that the connection component may be disposed between the battery modules, or certainly may be disposed between the battery module and a power distribution box.

At least one of the side beam structure 2 and the first partition 7 that correspond to each accommodating cavity 5 is provided with the first exhaust port and the exhaust channel 21 communicating with the first exhaust port. The first exhaust port is configured to guide gas in the accommodating cavity 5 into the exhaust channel 21. That is, at least one first exhaust port is correspondingly provided for each accommodating cavity 5. In addition, in another embodiment of this application, a second exhaust port may be further provided in at least one of the side beam structure 2 and the first partition 7. The second exhaust port is configured to communicate with the exhaust channel and exhaust gas in the exhaust channel 21.

In an embodiment of this application, refer to FIG. 1 to FIG. 3. The exhaust channel 21 is formed inside the side beam structure 2, and the first exhaust port is provided on a side that is of the side beam structure 2 and that is close to the first partition 7. The accommodating cavity 5 communicates with the exhaust channel 21 through the first exhaust port. The first exhaust port is configured to guide gas in the accommodating cavity 5 into the exhaust channel 21. In some embodiments, the second exhaust port may be further provided on a side that is of the side beam structure and that is away from the first partition 7. The second exhaust port is configured to exhaust gas in the exhaust channel 21.

In an embodiment of this application, the exhaust channel 21 is formed inside the first partition 7, the first exhaust port is provided on a side that is of the first partition 7 and that faces the accommodating cavity 5, and the second exhaust port communicating with the outside is provided on a side that is of the first partition 7 and that is away from the accommodating cavity 5. The first exhaust port is configured to guide gas in the accommodating cavity 5 into the exhaust channel 21. The second exhaust port is configured to exhaust gas in the exhaust channel 21.

In an embodiment of this application, a connected exhaust channel is formed in interiors of the first partition 7 and the side beam structure 2. The first exhaust port is provided on a side that is of at least one of the first partition 7 and the side beam structure 2 and that faces the accommodating cavity 5. The second exhaust port communicating with the outside is provided on a side that is of at least one of the first partition 7 and the side beam structure 2 and that is away from the accommodating cavity 5. The first exhaust port is configured to guide gas in the accommodating cavity 5 into the exhaust channel 21. The second exhaust port is configured to exhaust gas in the exhaust channel 21.

In this application, the side beam structure 2 is provided to cooperate with the first partition 7. The first partition 7 includes the partition body 71 connected to the side beam structure 2, and the insulating assembly 72 used for passage of the connection component connected to the battery module, thereby dividing the bottom plate 1 into the plurality of accommodating cavities 5. In addition, each accommodating cavity 5 implements exhaust through the first exhaust port, the second exhaust port, and the exhaust channel 21 that are communicated with each accommodating cavity 5.

In this application, once thermal runaway occurs on a battery module in a specific accommodating cavity 5, high-temperature gas generated by the battery module may enter the exhaust channel 21 through the first exhaust port, and be discharged through the second exhaust port, so that the high-temperature gas does not accumulate inside the battery tray, thereby improving exhaust effect of the battery tray.

In addition, due to blocking and heat insulation functions of the first partition 7, the high-temperature gas can be spatially and thermally isolated, and heat diffusion can be reduced, to avoid an impact of the thermal runaway on a battery module located in another accommodating cavity 5. This effectively prevents the high-temperature gas from causing secondary damage to the battery module or affecting another battery module.

In this embodiment of this application, the top plate is further included, and the top plate is sealingly connected to the side beam structure 2 and the first partition 7, so that the accommodating cavity 5 forms the sealed cavity.

The battery tray further includes the top plate, the top plate is disposed opposite to the bottom plate 1, and the side beam structure 2 and the first partition 7 are disposed between the top plate and the bottom plate 1. The top plate covers the accommodating cavity 5. The top plate is sealingly connected to sides that are of the side beam structure 2 and the first partition 7 and that are away from the bottom plate 1. The sealing connection is welding, bonding, or the like, so that the accommodating cavity 5 forms the sealed cavity.

The accommodating cavity 5 is covered by the top plate so that the accommodating cavity 5 forms the sealed cavity. Once thermal runaway occurs on a battery module in a specific accommodating cavity 5, gas generated by the battery module may directly enter the exhaust channel 21 through a first exhaust port correspondingly provided in the accommodating cavity, and then be discharged through the second exhaust port. This further improves exhaust effect.

In addition, during an exhaust process, each accommodating cavity 5 is independent, and an exhaust process in the accommodating cavity 5 in which the battery module has experienced thermal runaway does not affect a battery module in another accommodating cavity 5, thereby improving safety of the battery module 3.

In this embodiment of this application, the insulating assembly is provided with an avoidance area. The avoidance area is used for passage of the connection component connected to the battery module, and is adapted to enable the connection component to be sealed within the avoidance area.

As shown in FIG. 4, the insulating assembly is made of, for example, a rubber material. The insulating assembly is provided with the avoidance area. The avoidance area is, for example, provided at a position in which a cell of the battery module is located. The avoidance area penetrates through the insulating assembly.

The avoidance area is used for passage of the connection component connected to the battery module. At least a part of the connection component is located in the avoidance area, and both ends of the connection piece extend to both sides of the insulating assembly 72, to connect to the battery modules 3 located on both sides of the insulating assembly 72.

The avoidance area is also adapted to enable the connection component to be sealed within the avoidance area, thereby sealing a gap between the connection component and the avoidance area. Therefore, sealing performance of the whole insulating assembly 72 is improved, that is, sealing performance of the accommodating cavity 5 is further improved, thereby improving exhaust effect of the battery tray.

For example, one insulating assembly is disposed. Certainly, two or more insulating assemblies may be disposed. For example, one avoidance area is provided. Certainly, two or more avoidance areas may be provided.

It should be noted that, in this application, a quantity of insulating assemblies does not need to be in a one-to-one correspondence with a quantity of avoidance areas. That is, when one insulating assembly is disposed, one avoidance area may be provided, or two or more avoidance areas may be provided.

In some embodiments, a size of the avoidance area is adjusted based on a size of the connection component, so as to reduce the gap present when the connection component is located in the avoidance area, thereby improving sealing effect of the accommodating cavity 5.

In this embodiment of this application, the insulating assembly 72 includes a first insulating member 721 and a second insulating member 722. The first insulating member 721 is disposed on the partition body 71, and the second insulating member 722 is disposed on the first insulating member 721. A first avoidance area 723 is provided between the first insulating member 721 and the second insulating member 722.

Refer to FIG. 4 to FIG. 5. The insulating assembly 72 includes the first insulating member 721 and the second insulating member 722 that are stacked. The first insulating member 721 is disposed on the partition body 71, and the first insulating member 721 is fastened to the partition body 71 through clamping, or the like.

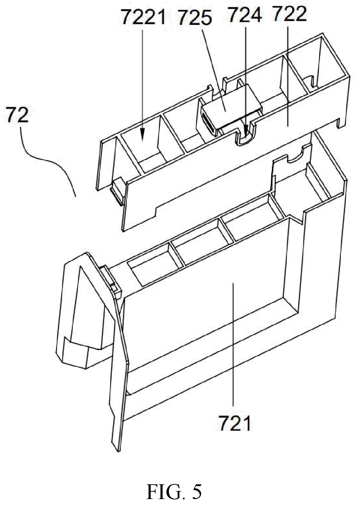

The second insulating member 722 is disposed on a side that is of the first insulating member 721 and that is away from the partition body 71. That is, the second insulating member 722 is disposed above the first insulating member 721, as shown in FIG. 4. In some embodiments, the second insulating member 722 is connected to the first insulating member 721 through clamping. Refer to FIG. 5. A bump is disposed on a side that is of the first insulating member 721 and that is close to the second insulating member 722, and a clamping slot for clamping engagement with the bump is provided in the second insulating member 722, to implement clamping engagement between the first insulating member 721 and the second insulating member 722.

Still refer to FIG. 4. The first avoidance area 723 is provided between the first insulating member 721 and the second insulating member 722.

Certainly, the avoidance area may be formed only on the first insulating member 721, or the avoidance area may be formed only on the second insulating member 722, or the avoidance area may be formed on both the first insulating member 721 and the second insulating member 722.

In this application, the insulating assembly 72 is provided to include the first insulating member 721 and the second insulating member 722. In other words, the insulating assembly 72 is disposed separately, so that during assembly, the connection component and the battery module 3 may be assembled first. Then, the entire battery module connected by using the connection component is placed on the first insulating member 721, and then the second insulating member 722 is assembled. This improves assembly convenience of the insulating assembly 72, and reduces processing difficulties of both the connection component and the , thereby improving processing efficiency.

In this application, the connection component includes, for example, a busbar and an electric wire made of a conductive metal material such as copper, aluminum, iron, nickel, copper alloy, aluminum alloy, or the like.

In this application, the first insulating member 721 and the second insulating assembly 72 are disposed, and the avoidance area is formed between the first insulating member 721 and the second insulating member 722. This is conducive to implementing partitioned insulation protection for a plurality of connection components between adjacent battery modules 3, and to setting a shape of the avoidance area based on a specific shape of the connection component, so as to reduce the gap present after the connection component is placed in the avoidance area, thereby improving sealing effect of the accommodating cavity 5, and further improving exhaust effect.

In this embodiment of this application, the insulating assembly 72 further includes a limiting member 725, and the second insulating member 722 is provided with a second avoidance area 724. The limiting member 725 is disposed on the second insulating member 722, and is configured to limit the connection component in the second avoidance area 724.

Refer to FIG. 4 to FIG. 5. The second avoidance area 724 and the limiting member 725 are disposed on a side that is of the second insulating member 722 and that is away from the first insulating member 721, and a side that is of the second avoidance area 724 and that is away from the first insulating member 721 is provided as an opening.

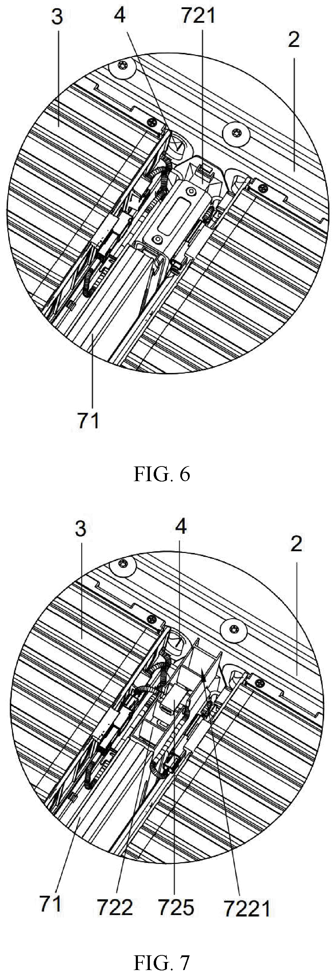

In some embodiments, the limiting member 725 covers the second avoidance area 724, and the limiting member 725 is fastened to the second insulating member 722. For example, the limiting member 725 is fastened to the second insulating member 722 by using a buckle structure, as shown in FIG. 6.

The connection component, such as an electric wire connected to the battery module 3 is disposed in the second avoidance area 724. The limiting member 725 is configured to limit the connection component in the second avoidance area 724, to limit the connection component in the second avoidance area 724, as shown in FIG. 7.

In this application, the limiting member 725 is disposed on the side that is of the second insulating member 722 and that is away from the first insulating member 721, and the limiting member 725 cooperates with the second avoidance area 724, to limit the connection component in the second avoidance area 724. This further improves limiting effect and insulation effect of the insulating assembly 72 on the connection component.

In this embodiment of this application, a sealant is disposed in the first insulating member 721, and the sealant is configured to fill a gap between the connection component and the first insulating member 721 in the first avoidance area 723. Alternatively, the sealant may be configured to fill the gap between the connection component and the second insulating member in the second avoidance area. That is, at least one of the first avoidance area and the second avoidance area is provided with the sealant. A position at which the sealant is disposed is set based on an actual situation.

Refer to FIG. 4 to FIG. 5. In an embodiment of this application, the second insulating member 722 is disposed above the first insulating member 721. The sealant is disposed in both the first insulating member 721 and the second insulating member 722. Specifically, at least one through hole 7221 is provided in the second insulating member 722, and the through hole 7221 penetrates through the second insulating member 722, so that the first insulating member 721 located below the second insulating member 722 communicates with the outside.

A sealant is disposed in the through hole 7221, the first insulating member 721 is bonded and fastened to the second insulating member 722 through the sealant, and the sealant seals the gap between the connection component and the avoidance area. Therefore, sealing performance of the whole insulating assembly 72 is improved, that is, sealing performance of the accommodating cavity 5 is further improved, thereby improving exhaust effect of the battery tray.

Preferably, an accommodating groove is provided on the side that is of the first insulating member 721 and that is close to the second insulating member 722, and the accommodating groove is provided in cooperation with the through hole 7221. As shown in FIG. 5, the accommodating groove is configured to accommodate the sealant, to further seal the gap between the connection component and the avoidance area, thereby improving sealing performance of the accommodating cavity 5.

In this application, the sealant is disposed in the first insulating member 721 and the second insulating member 722, which helps seal the gap between the connection component and the avoidance area, and further improves sealing performance of the accommodating cavity 5 in the battery tray. In this way, exhaust in each accommodating cavity 5 is independent from one another, and an airflow is discharged from a one-way valve 4 into the exhaust channel 21 based on a preset route, thereby improving exhaust effect of the battery tray.

In this embodiment of this application, the insulating assembly 72 includes the first insulating member 721 and the second insulating member 722. The first insulating member 721 is disposed on the partition body 71, and the second insulating member 722 is disposed on the first insulating member 721. The avoidance area is provided on at least one of the first insulating member 721 and the second insulating member 722.

In an embodiment of this application, the avoidance area includes the first avoidance area 723 and the second avoidance area 724. The first avoidance area 723 and the second avoidance area 724 accommodate a busbar and an electric wire.

In some embodiments, for example, the first avoidance area 723 allows passage of a busbar connected the battery module 3, and the second avoidance area 724 allows passage of an electric wire connected the battery module 3. Certainly, the first avoidance area 723 may alternatively be provided for passage of an electric wire connected to the battery module 3, and the second avoidance area 724 may be used for passage of a busbar connected to the battery module 3. This is not specifically limited in this application.

In addition, positions at which the first avoidance area 723 and the second avoidance area 724 are located are not limited in this application. For example, the second avoidance area 724 is provided on the side that is of the second insulating member 722 and that is away from the first insulating member 721. Specific content is as follows.

In an embodiment, as shown in FIG. 4, the first avoidance area 723 is formed on the side that is of the first insulating member 721 and that is close to the second insulating member 722.

In an embodiment, the first avoidance area 723 is formed on the first insulating member 721 and the second insulating member 722, and is located between the first insulating member 721 and the second insulating member 722.

In an embodiment, the first avoidance area 723 is formed on a side that is of the second insulating member 722 and that is close to the first insulating member 721.

It should be noted that the insulating assembly 72 may further include more insulating members, such as a third insulating member and a fourth insulating member. A quantity of insulating members in the insulating assembly 72 is not specifically limited in this application, and a structure of the insulating assembly 72 is selected based on an actual structure.

When the insulating assembly 72 is mounted on the battery tray provided in this application, the first insulating member 721 is first mounted on the partition body 71, and then copper busbars between adjacent battery modules 3 are connected and lap the first avoidance area 723. Next, the second insulating member 722 is mounted on the first insulating member 721, and the second insulating member 722 limits the copper busbar in the first avoidance area 723. Then, an electric wire between the adjacent battery modules 3 is placed in the second avoidance area 724 and is limited by the limiting member 725. Finally, the sealant is injected into the through hole 7221 of the second insulating member 722, to seal an area between the first insulating member 721 and the second insulating member 722.

In this embodiment of this application, the one-way valve 4 is disposed at the first exhaust port, and the one-way valve 4 is configured to guide gas in the accommodating cavity 5 into the exhaust channel 21.

In this application, the exhaust channel 21 is provided inside the side beam structure 2, and at least one first exhaust port is correspondingly provided for each accommodating cavity 5. Each first exhaust port is provided with the one-way valve 4. The one-way valve is configured to guide gas in the accommodating cavity 5 into the exhaust channel 21.

The one-way valve 4 is disposed, which ensures that high-temperature gas or electrolyte vapor generated during thermal runaway of the cell is discharged only from the accommodating cavity 5 into the exhaust channel 21, and the gas in the exhaust channel 21 does not flow back into the accommodating cavity 5. This improves exhaust performance of the battery tray during the thermal runaway of the cell, and reduces a possibility of fire and explosion caused by poor exhaust performance and blow-by gas.

In some embodiments, the second exhaust port is provided with an explosion-proof valve 6. Gas in the exhaust channel 21 is discharged from the explosion-proof valve 6, and the explosion-proof valve 6 is disposed to improve the safety of the battery tray during use.

Refer to FIG. 1 and FIG. 2. The side beam structure 2 is further provided with the explosion-proof valve 6, and the explosion-proof valve 6 is disposed at the second exhaust port. Specifically, the explosion-proof valve 6 may be disposed on the first side beam 22 or on the second side beam 23. The explosion-proof valve 6 may alternatively be disposed on both the first side beam 22 and the second side beam 23. The explosion-proof valve 6 may alternatively be disposed on the first partition 7. Here, a quantity of explosion-proof valves 6 is not limited in this application.

In some embodiments, the explosion-proof valve 6 and the one-way valve 4 are disposed on the first side beam 22 and the second side beam 23. As shown in FIG. 1, the one-way valve 4 is disposed on the first side beam 22, and the explosion-proof valve 6 is disposed on the second side beam 23. The explosion-proof valve 6 and the one-way valve 4 are disposed separately, so that a path for discharging the high-temperature gas or electrolyte vapor generated during thermal runaway of the cell through the exhaust channel 21 is prolonged, thereby implementing cooling and buffering of the high-temperature gas or electrolyte vapor. In this way, a pressure of the high-temperature gas or electrolyte vapor is reduced when the high-temperature gas or electrolyte vapor reaches the explosion-proof valve 6 for discharge.

In this embodiment of this application, the side beam structure 2 includes the first side beam 22 and the second side beam 23. Two first side beams 22 and two second side beams 23 are disposed, and the two first side beams 22 and the two second side beams 23 are enclosed to form an accommodating cavity. The one-way valve 4 is disposed on at least one of the first side beam 22 and the second side beam 23.

Refer to FIG. 1. The side beam structure 2 includes two first side beams 22 and two second side beams 23. The two first side beams 22 are parallel to each other and a gap is provided between the two first side beams 22. The two second side beams 23 are parallel to each other and a gap is disposed between the two second side beams 23. An included angle is provided between the first side beam 22 and the second side beam 23, for example, the included angle is 90 degrees. The second side beam 23 is disposed between the two first side beams 22, the first side beam 22 is disposed between the two second side beams 23, and the first side beam 22 and the second side beam 23 are sequentially connected end-to-end to form a ring.

The first exhaust port may be provided in the first side beam 22, the first exhaust port may alternatively be provided in the second side beam 23, or the first exhaust port may alternatively be provided in both the first side beam 22 and the second side beam 23. A specific position of the first exhaust port is not limited in this application.

In this embodiment of this application, a second partition 8 is further included, and the first partition 7 and the second partition 8 are disposed in a crossed manner.

In an embodiment of this application, the first partition 7 includes the first partition 7 and the second partition 8 that are disposed in a crossed manner. For example, the first partition 7 and the second partition 8 are disposed vertically.

As shown in FIG. 1, the first partition 7 includes four first partitions 7 and one second partition 8, and six accommodating cavities 5 are formed in the accommodating cavity. In some embodiments, the second partition 8 is disposed at a centerline of the second side beam 23, the second partition 8 is perpendicular to the second side beam 23, and two ends of the second partition 8 are separately fastened to the second side beam 23. The four first partitions 7 are disposed, the four first partitions 7 are evenly divided into two groups, and are symmetrically arranged on both sides of the second partition 8, and two second partitions 8 located on the same side of the second partition 8 are parallel to each other and a gap is provided between the two second partitions 8. One end of the first partition 7 is fastened to the first side beam 22, and the other end of the first partition 7 is fastened to the second partition 8.

This application further provides a battery pack, including a battery module 3 and the foregoing battery tray. The battery module 3 is disposed in the accommodating cavity 5.

This application provides a battery pack, including a plurality of battery modules 3 and a battery tray. The battery tray includes a bottom plate 1, a side beam structure 2 is disposed on the bottom plate 1, and the side beam structure 2 and the bottom plate 1 are enclosed to form an accommodating cavity. A first partition 7 is disposed in the side beam structure 2. The first partition 7 divides the accommodating cavity into a plurality of accommodating cavities 5, and each accommodating cavity 5 is correspondingly disposed with the battery module 3.

In some embodiments, an exhaust channel 21 is formed inside the side beam structure 2, a one-way valve 4 is disposed on the side beam structure 2, and one one-way valve 4 is correspondingly disposed in each accommodating cavity 5. When thermal runaway occurs on a cell of the battery module 3, high-temperature gas or electrolyte vapor is generated in the accommodating cavity 5, and the one-way valve 4 is configured to: guide the gas in the accommodating cavity 5 into the exhaust channel 21, and prevent the gas in the exhaust channel 21 from flowing back into the accommodating cavity 5. This improves exhaust performance of the battery tray during thermal runaway of the cell, and reduces a possibility of fire and explosion caused by poor exhaust performance and blow-by gas.

This application further provides a vehicle, including the foregoing battery pack.

In the descriptions of this specification, descriptions with reference to the terms "an embodiment", "some embodiments", "example embodiments", "examples", "specific examples", "some examples", or the like mean specific characteristics, structures, materials or features described with reference to the embodiments or examples are included in at least one embodiment or example of this application. In this specification, schematic expressions of the foregoing terms do not necessarily refer to a same embodiment or an example. Moreover, the specific characteristics, structures, materials, or features described may be combined in a proper manner in any one or more embodiments or examples.

Although embodiments of this application have been illustrated and described, a person of ordinary skill in the art should understand that various changes, modifications, substitutions and variations may be made to these embodiments without departing from the principles and purposes of this application, the scope of this application is defined by the claims and any equivalents thereof.

## Claims

1. A battery tray, comprising:
a bottom plate (1), wherein the bottom plate (1) is configured to support a battery module (3);
a side beam structure (2), wherein the side beam structure (2) is disposed on a periphery of the bottom plate (1) and is enclosed together with the bottom plate (1) to form a mounting cavity; and
at least one first partition (7), wherein the first partition (7) is located in the mounting cavity and is connected to the side beam structure (2), and divides the mounting cavity into at least two accommodating cavities (5) for housing the battery module (3), wherein
the first partition (7) comprises a partition body (71) and an insulating assembly (72), the partition body (71) is connected to the side beam structure (2), the partition body (71) is provided with a notch, and the insulating assembly (72) is configured to: seal the notch and allow passage of a connection component connected to the battery module; and
at least one of the side beam structure (2) and the first partition (7) that correspond to each accommodating cavity (5) is provided with a first exhaust port and an exhaust channel (21) communicating with the first exhaust port, and the first exhaust port is configured to guide gas in the accommodating cavity (5) into the exhaust channel (21).

2. The battery tray according to claim 1, further comprising a top plate, wherein the top plate is sealingly connected to the side beam structure (2) and the first partition (7), so that the accommodating cavity (5) forms a sealed cavity.

3. The battery tray according to claim 1 or 2, wherein the insulating assembly is provided with an avoidance area, and the avoidance area is used for passage of the connection component connected to the battery module, and is adapted to enable the connection component to be sealed within the avoidance area.

4. The battery tray according to claim 3, wherein the insulating assembly (72) comprises a first insulating member (721) and a second insulating member (722), the first insulating member (721) is disposed on the partition body (71), and the second insulating member (722) is disposed on the first insulating member (721); and
a first avoidance area (723) is provided between the first insulating member (721) and the second insulating member (722).

5. The battery tray according to claim 4, wherein the insulating assembly (72) further comprises a limiting member (725), the second insulating member (722) is provided with a second avoidance area (724), and the limiting member (725) is disposed on the second insulating member (722), and is configured to limit the connection component in the second avoidance area (724).

6. The battery tray according to claim 5, wherein a sealant is disposed inside the first insulating member (721), and the sealant is configured to fill a gap between the connection component and the first insulating member (721) in the first avoidance area (721).

7. The battery tray according to claim 5 or 6, wherein a sealant is disposed inside the second insulating member (722), and the sealant is configured to fill a gap between the connection component and the second insulating member (722) in the second avoidance area (724).

8. The battery tray according to claim 3, wherein the insulating assembly (72) comprises a first insulating member (721) and a second insulating member (722), the first insulating member (721) is disposed on the partition body (71), and the second insulating member (722) is disposed on the first insulating member (721); and
at least one of the first insulating member (721) and the second insulating member (722) is provided with the avoidance area.

9. The battery tray according to any one of claims 1 to 8, wherein the first exhaust port is provided with a one-way valve (4), and the one-way valve (4) is configured to guide the gas in the accommodating cavity (5) into the exhaust channel (21).

10. The battery tray according to any one of claims 1 to 9, further comprising a second partition (8), wherein the first partition (7) and the second partition (8) are disposed in a crossed manner.

11. A battery pack, comprising a battery module (3) and the battery tray according to any one of claims 1 to 10, wherein the battery module (3) is disposed in the accommodating cavity (5).

12. A vehicle, comprising the battery pack according to claim 11.
